# EUROPEAN PATENT APPLICATION

(11) **EP 4 686 653 A1**
(43) Date of publication of application: **04.02.2026**
(21) Application number: 24192195.6
(22) Date of filing: 31.07.2024
(51) Int. Cl.: B64D 1/00, G06F 3/01, G06F 3/16, G08G 5/23, B64D 43/00

(54) **SYSTEM FOR AND METHOD OF CONTROLLING A HUMAN-MACHINE INTERFACE**

(71) Applicant: Rockwell Collins, Inc., Cedar Rapids, IA 52498 (US)
(72) Inventor: DE LA CRUZ BEJARANO ESPADA, Carmen, Cork T12 DX7X (IE); MAYIMA, Amandine Alexia, Cork T23 CY9K (IE); DE MASELLIS, Riccardo, Cork T12 D297 (IE); WATKINS, David, Syracuse, UT 84075 (US)
(74) Representative: Dehns

(57) **Abstract**

A method of and system (100) for controlling a human-machine interface, where the system includes a human-machine interface for outputting information to a user, one or more sensors (106) for measuring one or more physiological conditions of the user, and a processor (108). The human-machine interface includes one or more sensory channels (112, 114, 116). The processor (108) receives the one or more physiological conditions from the one or more sensors (106) and determines the sensory bandwidth of the user based on the one or more physiological conditions, where the sensory bandwidth is the capacity of the user to respond to visual, aural, and haptic stimulation. The processor (108) receives information (102, 104) to be delivered to the user, and selects one or more sensory channels (112, 114, 116) through which to deliver the information, based on the sensory bandwidth of the user. The processor (108) outputs the information to the user through the selected sensory channels (112, 114, 116) of the human-machine interface.

## Description

### FIELD OF TECHNOLOGY

The examples described herein relate to a system for and a method of controlling a human-machine interface in response to physiological conditions of a user, in particular where the human-machine interface is within an aircraft or air traffic control system.

### BACKGROUND

During the flight of an aircraft, many signals are issued to both the pilot and an air traffic controller, from systems onboard the aircraft, and communications between the pilot and air traffic control. Additionally, the pilot and the air traffic control operator must have a high level of situational awareness, in order to respond to said signals appropriately, as well as account for other potential issues, such as problems that may be occurring onboard, weather conditions, and other events external to the aircraft.

For a pilot, air traffic control may indicate that the aircraft should fly at a lower altitude to avoid upcoming poor weather conditions, whereas systems onboard the aircraft may simultaneously alert the pilot to a fault with a component, enabling the pilot to decide how to safely rectify the situation, e.g. by an emergency landing.

Similarly, an air traffic controller must also respond to signals from a variety of different sources, for example relating to weather conditions, and/or signals from other aircraft. It is equally as important for the air traffic controller to take notice of these signals, to avoid any accidents happening.

This requires both the pilot and air traffic controller to be able to process a large amount of information at once. Furthermore, these signals may be issued sequentially or simultaneously over one or more sensory channels (e.g. visual, haptic and/or aural), such that it may be difficult for the pilot or air traffic controller to acknowledge all signals, for example if an audio signal is issued while the pilot is reading a message on their cockpit screen.

This is especially likely in a stressful situation, where the pilot or air traffic controller may have a reduced capacity to process new information, which can lead to important information being lost. It will be appreciated that such a situation may be one in which the safety of the aircraft is critical.

The present disclosure aims to address these problems.

### SUMMARY

According to this disclosure, there is provided a method of controlling a human-machine interface, the method comprising:
measuring one or more physiological conditions of a user interacting with the interface;
using the one or more physiological conditions to determine the sensory bandwidth of the user;
   wherein the sensory bandwidth comprises the user's capacity to respond to visual, aural and/or haptic stimulation;
receiving information to be delivered to the user;
selecting one or more sensory channels of the interface through which to deliver the information, based on the sensory bandwidth of the user;
   wherein the one or more sensory channels comprise one or more of a visual channel, an aural channel and a haptic channel;
outputting information through the selected sensory channels of the interface.

Also according to this disclosure, there is provided a system for controlling a human-machine interface, the system comprising:
a human-machine interface for outputting information to a user;
   wherein the human-machine interface comprises one or more sensory channels;
   wherein the one or more sensory channels comprise one or more of a visual channel, an aural channel and a haptic channel;
one or more sensors for measuring one or more physiological conditions of the user;
a processor, wherein the processor is arranged to:
   receive the one or more physiological conditions from the one or more sensors;
   determine the sensory bandwidth of the user based on the one or more physiological conditions;
      wherein the sensory bandwidth comprises the user's capacity to respond to visual, aural and/or haptic stimulation;
   receive information to be delivered to the user;
   selecting one or more sensory channels through which to deliver the information, based on the sensory bandwidth of the user; and
   output the information to the user through the selected sensory channels of the human-machine interface.

A human-machine interface comprises visual, aural and/or haptic sensory channels that can be used to deliver information to a user. For each of the senses (sight, sound and touch), the user will have a sensory bandwidth. The sensory bandwidth is the amount of information each sense is able to be perceived by the user in any given moment. In order for the information delivered by the human-machine interface to be acknowledged and processed by the user, it should be delivered via a sensory channel for which the associated sense of the user has a sufficient sensory bandwidth.

Depending on the physiological condition of the user, the user's sensory bandwidth may be reduced for one or more senses. This may result in the reduction of the user's capacity to respond to information delivered through one or more sensory channels.

The physiological condition(s) of the user, and thus the sensory bandwidth of the user, may be influenced by information already being presented to the user via the human-machine interface. For example, if the human-machine interface is delivering textual information via a screen, the visual sensory bandwidth of the user may be reduced. The user's aural sensory bandwidth may be reduced while they are reading textual information via a screen, as they may be very focused on the visual delivery.

The physiological condition(s) of the user, and thus the sensory bandwidth of the user, may be influenced by environmental factors. For example, if the surroundings are very loud, the user may have a reduced aural sensory bandwidth. The surrounding situation may also influence the sensory bandwidth of the user, for example if the user is particularly stressed, their overall sensory bandwidth for all senses may be reduced, or they may even experience a total loss of capacity for one or more senses.

Owing to the potential for the user to have different sensory bandwidths for different senses, were the human-machine interface to deliver information via a random sensory channel, the user may not notice or respond to the information. This may be detrimental when it is crucial for the user to take notice of a particular notification. A human-machine interface may be controlled to deliver information to the sensory channel to which the user may be more likely to respond, based on their available sensory bandwidth. This may allow for near lossless communication with the user via the human-machine interface, by dynamically changing how the information is presented to the user based on their current sensory bandwidth.

The system comprises one or more sensors that are arranged to measure one or more physiological conditions of the user. In some examples, the one or more sensors comprise one or more of: a brain activity monitor, an eye movement sensor, a heart rate monitor, a blood pressure monitor, or any other suitable sensory for monitoring the user. The measurement(s) taken by the sensor(s) are sent to a processor, wherein the processor is arranged to determine the sensory bandwidths of the different senses of the user. This is used to determine which sensory channel(s) of the human-machine interface should be used to present information to the user.

In some examples, the processor is arranged to use the measurement(s) of the physiological condition(s) of the user taken by the one or more sensors to determine the sensory load of the user. The sensory load may be how much information each sense of the user is currently processing. This may be used to determine the sensory bandwidth of the user. For example, the processor may be arranged to determine that the user is already processing a large amount of aural information, and thus whilst the user has some available aural sensory bandwidth, it may be useful to use a visual or haptic channel with a similar sensory bandwidth, to avoid overloading the user with aural information, e.g. many overlapping or sequential audio signals.

In some examples, the processor is arranged to use the measurement(s) of the physiological condition(s) of the user taken by the one or more sensors to determine the overall cognitive load of the user. The cognitive load may be how much total information the user is currently processing. This may be useful in determining how much additional information the user is able to process, regardless of which sensory channel it is presented through. For example, if the cognitive load of the user is high, the processor may be arranged to reduce the amount of information delivered and/or adapt the way the information is delivered, such that the human-machine interface does not overload the user with information.

The processor may be implemented in any suitable or desired way. For example, the processor may be a single processing module within the system for controlling the human-machine interface. In some examples, the processor comprises a plurality of modules, wherein each of the plurality of modules are arranged to communicate with one another to control the human-machine interface. The plurality of modules making up the processor may be located in the same region, e.g. in the same device. The plurality of modules making up the processor may be located "off-chip" with respect to one another.

In some examples, the processor is arranged to analyse the data from the sensor(s) using a statistical model, e.g. a machine learning algorithm. For example, different indicators in the physiological condition(s) of the user may be indicative of the sensory bandwidth of the user, e.g. a high heart rate may indicate the user is stressed, and thus their sensory bandwidth may be reduced in all sensory channels. In an example when the sensor(s) comprise an eye-tracking module, reduced pupil movement may indicate that the user has a high visual bandwidth and a low aural bandwidth.

In some examples, the processor is arranged to analyse the data from the sensor(s) using a neural network. The neural network may be trained on a set of data indicating saturation of different sensory channels (e.g. images or signals detected by the sensor(s) of users in different scenarios corresponding to high and/or low sensory bandwidths in the visual, haptic and/or aural sensory channels), in order to train the processor to detect particular features in the data from the sensor(s), to allow the processor to determine the sensory bandwidth of the user.

The processor is arranged to receive information to be passed to the user using one or more sensory channels of the human-machine interface. The selection of the sensory channel(s) by the processor depends on the user's associated sensory bandwidth for each of the sensory channels. For example, the processor may be arranged to select a sensory channel with the highest available sensory bandwidth. In another example, the processor may be arranged to select a sensory channel that is already being used to deliver information, as it may be likely that the user is already paying attention to that particular sensory channel.

The sensory channels of the human-machine interface include visual, aural and/or haptic channels. Each of these sensory channels may include one or more ways of presenting information to the user's associated sense.

For example, the visual sensory channel may comprise one or more of: written instructions, symbolic instructions, a flash, or other suitable ways of presenting visual information. Thus the system may comprise a screen and/or lights arranged to output information through the visual sensory channel.

For example the aural sensory channel may include one or more of: spoken instructions (e.g. including paralinguistic communications), an alarm, a buzzer, or other suitable ways of presenting aural information. For example, the aural sensory channel may output aural information using spatial audio. Thus the system may comprise a speaker and/or headphones arranged to output information through the aural sensory channel.

For example the haptic sensory channel may include one or more of: a vibration directing the attention of the user to a particular region, a sequence of vibrations indicative of instructions, or other suitable ways of presenting haptic information. Thus the system may comprise a vibrating surface in contact with, or able to be interacted by, the user (e.g. a controller or seat), or other suitable ways of presenting haptic information. For example, the output of haptic sensory channel may be used to draw the attention of the user to information being presented via an alternative sensory channel, e.g. by vibrating a screen that the user should look at to receive visual information. This may be useful in the event that the user has a high visual and haptic sensory bandwidth, but is only focused on one area, e.g. a different screen.

Selecting one or more sensory channels based on the determined sensory bandwidth of the user may allow the human-machine interface to deliver information to the user such that the user is able to acknowledge and act on the information, rather than ignoring or missing the information. For example, presenting the information to a sensory channel with a low associated sensory bandwidth such that the user is able to acknowledge and respond to the information, may help to reduce the adrenaline response of the user in an emergency. This may help to prevent reduction of the sensory bandwidth of the user. For example, adrenaline may cause cognitive tunnelling, which reduces the capacity of the user to process information, e.g. by reducing the sensory bandwidths of one or more senses (e.g. to zero). Therefore, reducing the adrenaline of the user may enable a more reasoned response to an emergency situation, and may allow the user to process more information.

The processor may be arranged to determine when the user is experiencing cognitive tunnelling by processing the measurement(s) of the physiological condition(s) of the user taken by the one or more sensors. The processor may be arranged to send information to the sensory channel of the human-machine interface that the user is determined to be "tunnelled" towards. For example, the processor may be arranged to determine that the user is only focused on a particular screen (e.g. by detection of the eye movement of the user by the one or more sensors), and thus any information should be presented to the user visually via this screen. Therefore, if the system determines that the user is experiencing cognitive tunnelling, the system may be arranged to make suitable adjustments to the human-machine interface, so to help the system to continue operation.

In some examples, the processor is arranged to sort the information to be presented to the user in order of priority. For example, some pieces of information may be highly time-sensitive and/or critical (e.g. in an emergency), and so it may be important that they are presented before less time-sensitive information. In some examples, when the user is determined to have a low sensory bandwidth, the (e.g. processor of the) system is arranged to reduce the information presented to the user, e.g. such that only high-priority information is presented. This may help to prevent overwhelming the user, and may help to ensure that all important information is acknowledged and responded to.

In some examples, the system including the human-machine interface comprises a portion of an aircraft. For example, the user may be a pilot of the aircraft, and the human-machine interface may be arranged within the cockpit of the aircraft. The system may allow for information regarding the flight of the aircraft to be efficiently communicated to the pilot in such a way that the pilot will acknowledge and respond to the information. This is particularly important within an aircraft, as the pilot must quickly respond to large amounts of information, especially in an emergency situation, or a high workload flight phase (e.g. during take-off).

The information to be communicated to the pilot using the human-machine interface may comprise information from systems onboard the aircraft. For example, the information may comprise communications from an on-board flight management system.

The information may comprise measurements from one or more aircraft sensors monitoring the status of one or more aircraft components (e.g. fuel levels, engine functionality, or other relevant status information). The information corresponding to the status of one or more aircraft components may be communicated directly to the pilot using the human-machine interface, or may be first sent to the flight management system, and then communicated to the pilot via the human-machine interface.

The information to be communicated to the pilot using the human-machine interface may comprise information from a source external to the aircraft. For example, the external communications may comprise communications from an air traffic controller. Communications from air traffic control often require acknowledgement from the pilot, and may include time-sensitive information. Therefore, it may be important that the pilot is aware of these communications and is able to respond quickly using the human-machine interface.

In some examples, the processor is arranged to determine the contextual situation of the system, e.g. of the human-interface. For example, where the system is onboard an aircraft, the processor may be arranged to use internal information from the sensor(s) on-board the aircraft and/or external information from air-traffic control to determine the contextual situation of the system. For example, the processor may be arranged to determine from the internal and/or external information that the aircraft is landing (e.g. by the air-traffic control giving clearance for landing, or the landing gear of the aircraft being deployed). For example, the processor may be arranged to determine from the contextual situation of the aircraft the operational mode of the aircraft, and thus what conditions should be fulfilled for safe operation of the aircraft. This may be useful when determining the priority of the information to be delivered to the user, e.g. when the processor determines the aircraft is landing, all information relating to the landing of the aircraft is prioritised.

For example, the processor may be arranged to determine from the internal and/or external information the surrounding air traffic information and/or meteorological conditions surrounding the aircraft. The processor may be arranged to use this information to determine a specific operation or procedure that should be executed, and thus information regarding this operation or procedure that should be communicated to the pilot. For example, when the processor determines that it is raining, all information relating to rain-specific processes (e.g. turning on windscreen wipers) is prioritised.

In some examples, the system including the human-machine interface comprises a portion of an air traffic control system. For example, the user may be an air traffic controller, and the human-machine interface may be arranged within an air traffic control facility. The system may allow the air traffic controller to efficiently receive information regarding the status of various aircraft and/or weather conditions, in such a way that the air traffic controller is more able to acknowledge and respond to the information.

In some examples, the processor is arranged to receive one or more inputs of the user to the human-machine interface, and uses the input(s) to determine the sensory bandwidth of the user. For example, the processor may be arranged to receive the input of the pilot to the human-machine interface of the aircraft. This may allow the processor to use the user input to determine the sensory bandwidth of the user, in addition to the one or more physiological conditions of the user.

In some examples, the processor is arranged to use the one or more inputs of the user to determine whether the user is responding to information previously presented using the one or more sensory channels. For example, if the processor determines that the user has not acknowledged information presented using a particular sensory channel, the processor may re-issue the information, e.g. using a different sensory channel with a higher sensory bandwidth. The processor may also be arranged to receive the response of the system to the one or more inputs of the user, to determine whether the user is responding to information previously presented.

In some examples, the system comprises one or more action sensors arranged to monitor one or more actions of the user, wherein the processor is arranged to receive the one or actions of the user from the one or more action sensors, and determine whether the user is responding to the information previously presented using the one or more sensory channels. For example, the action sensor(s) may comprise at least one of a camera, a motion sensor, or another sensor suitable for monitoring the actions of the user.

In some examples, the processor is arranged to re-issue the information, when the processor determines that the user has not acknowledged information presented. For example, the processor may be arranged to re-issue the information using the same sensory channel, but may adjust the means of presentation of the information presented to the user using the human-machine interface. For example, the processor may change from showing a textual presentation of information on a screen to showing a symbol on the screen, or the processor may change from issuing a verbal warning to an (audible) alarm.

This may be useful when the user is experiencing cognitive tunnelling, but has a low sensory bandwidth on the available sensory channel. Alternatively, if the user is not responding to a symbolic presentation of information, the processor may change to showing a textual presentation of information. This may be useful if the user is not understanding the information issued by the human-machine interface.

In some examples, the system is arranged to adjust the level of detail of the information output through the human-machine interface, based on the sensory bandwidth of the user. For example, if the user has a low sensory bandwidth (e.g. in a particular sensory channel), the human-machine interface may be arranged to reduce the level of detail of information presented to the user. This may be achieved by changing the presentation of the information from a textual presentation to a symbolic presentation.

In some examples, the system is arranged to adjust the time and/or space distribution of the information output through the human-machine interface based on the sensory bandwidth of the user. For example, if the user has a low sensory bandwidth (e.g. in a particular sensory channel), the human-machine interface may be arranged to issue signals relating to the information to be presented to the user with longer time periods between signals. This may also be useful to deconflict communications between sensory channels, for example to prevent information being delivered through more than one sensory channel at once, e.g. where the user has a low sensory bandwidth and/or a high cognitive load.

In some examples, the system is arranged to re-issue information using an adaptive transition, e.g. to prevent cognitive dissonance and sensory channel saturation. For example, a piece of information may be presented visually, e.g. in a first format, but may not be noticed by the pilot, and so the information is later presented aurally, e.g. in a second format. The user may be made aware of the transition between the first and second information formats, for example by transitioning between the two formats gradually, or by including an indication in the second format the information has already been presented in a first format. This may be useful to avoid confusing the user, e.g. the user may think a new piece of information is being presented, rather than the same piece of information being presented again. For example, the user may be confused when information disappears from a screen before they have had a chance to look at it.

In some examples, the processor is arranged to determine the situational awareness of the user, using the measured physiological condition(s) of the user. The processor may also be arranged to use the user's actions in response to the information presented by the human-machine interface, to determine the situational awareness of the user. For example, the eye movement of the user may indicate that they are not aware of their present situation. The processor may be arranged to adjust the presentation of information using the human-machine interface, depending on the situational awareness of the user, for example by outputting only high-priority, less detailed information through a single sensory channel.

In some examples, the processor is arranged to weight the different ways of presenting information via the human-machine interface, and determine which is the most useful based on the situation. For example, the user may have sufficient sensory bandwidth in more than one sensory channel at a time, e.g. a high visual and aural sensory bandwidth. The processor may be arranged to weight the different ways of presenting information, e.g. the different sensory channels, and different formats of information within those sensory channels, based on the situation (e.g. if it is dark in the cockpit, information should not be presented visually). This weighting may then be used by the processor to determine how to present the information in order to optimise the situational awareness of the user.

The processor may be arranged to weight the different formats of presenting information via the human-machine interface, and determine which is the most useful based on the type of information that is being presented. For example, the user may have sufficient sensory bandwidth in more than one sensory channel at a time, e.g. a high visual and aural sensory bandwidth. The processor may be arranged to weight the different ways of presenting information e.g. the different sensory channels, and different formats of information within those sensory channels, based on the type of information (e.g. very detailed instructions that should be followed precisely). This weighting may then be used by the processor to determine how to present the information in order to optimise the situational awareness of the user.

It will be appreciated that any features described with reference to the system for controlling a human-machine interface also apply equally to the method of controlling a human-machine interface.

### BRIEF DESCRIPTION OF THE DRAWINGS

One or more non-limiting examples will now be described, by way of example only, with reference to the accompanying figures, in which:
Figure 1 shows schematically a system for controlling a human-machine interface;
Figure 2 shows schematically an information flow diagram within a system for controlling a human-machine interface;
Figure 3 is a flow-chart of a method for controlling a human-machine interface.

### DETAILED DESCRIPTION

The examples described herein may be used for controlling a human-machine interface for an aircraft in response to the sensory bandwidth of the pilot. Other uses, however, are also envisaged and the examples are not limited to this.

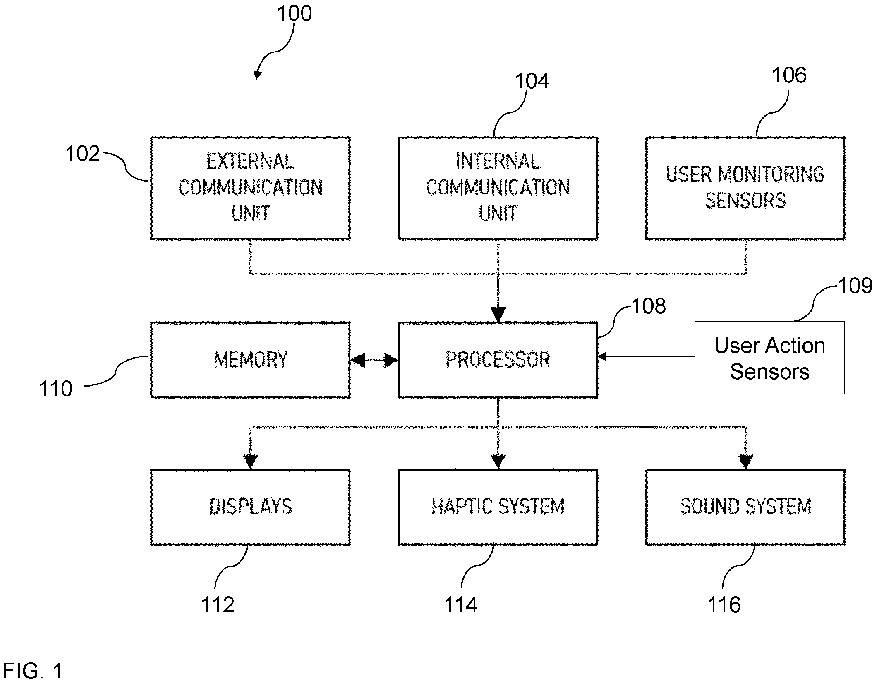

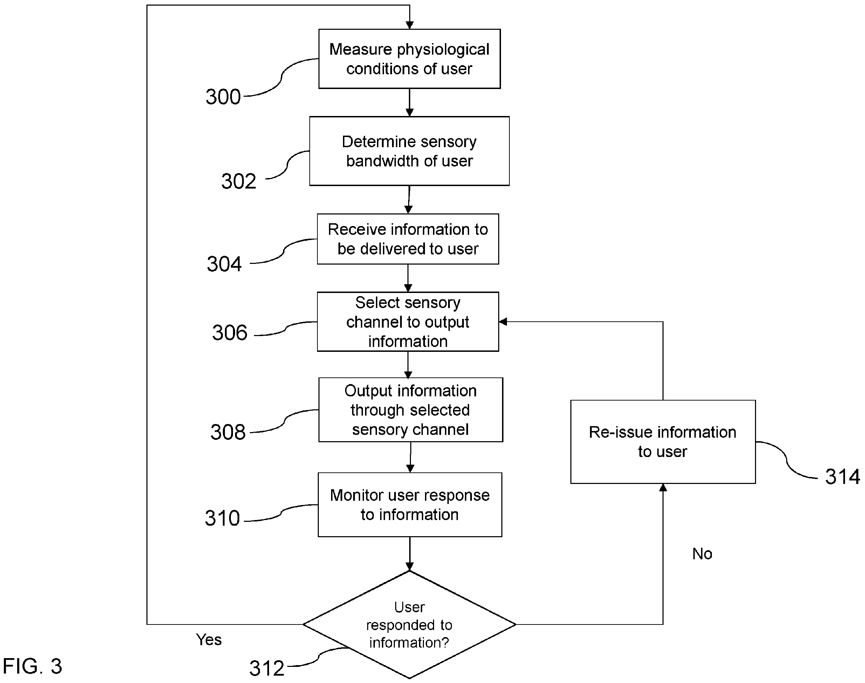

Figure 1 shows schematically a system 100 for controlling a human-machine interface, which, for example, performs the steps described with reference to Figure 3. The system 100 may be a part of an aircraft or air-traffic control system.

The system 100 includes a processor 108 in communication with a memory 110. The processor 108 is configured (e.g. by executing appropriate software) to receive an algorithm for determining the sensory bandwidth of the user, and thus which sensory channel to use when presenting information. The sensory bandwidth is the capacity of the pilot to process new information presented to each of their senses, e.g. touch, sight, and sound.

The system 100 also includes an external communication unit 102 and an internal communication unit 104. The external communication unit 102 is arranged to receive information from sources external to the aircraft, for example from air traffic control or from other aircraft. The internal communication unit 104 is arranged to receive information from sources internal to the aircraft, for example navigational information from the flight management system (not shown), or status information from components of the aircraft, such as the deployment status of the landing gear. The external communication unit 102 and internal communication unit 104 are arranged to output information to the processor 108. This information may be information to be passed on to the user, and may also be information relevant to the contextual situation of the aircraft (e.g. the flight phase of the aircraft, such as take-off or landing).

The system 100 further includes user monitoring sensors 106, which are arranged to monitor the physiological conditions of the user. The sensors may include one or more of: a brain activity monitor, an eye tracking sensor; a heart rate monitor; a blood pressure monitor; and/or other suitable sensors for monitoring the user. The measurements from these sensors are output to the processor 108, where the processor is configured to determine the sensory bandwidth of the user based on the measurements of the physiological conditions.

For example, the pilot of the aircraft may be fitted with a heart rate monitor and a blood pressure monitor when boarding the aircraft. There may also be sensors present within the cockpit of the aircraft, for example in the seat used by the pilot, e.g. to detect movement, and present in the displays used by the pilot, e.g. to track eye movement. The pilot may also be fitted with a headset or other suitable equipment for monitoring brain activity.

For example, the eye tracking sensor may measure that the user is looking at many different things very quickly. Upon receiving this information, the processor may determine that the user has a low visual sensory bandwidth, as it is unlikely that they will be able to process any new visual information.

The processor 108 is arranged to receive the information from the external communication unit 102, the internal communication unit 104, and the user monitoring sensors 106, in order to determine the information that should be passed onto the user based on the contextual situation of the aircraft. For example, the processor may determine that the contextual situation of the aircraft is that the aircraft is taking off, and thus information from the external and internal communication sources 102, 104 should be prioritised and passed onto the user.

The system 100 also includes a human-machine interface, which includes three sensory channels through which to output information to the user. This includes visual displays 112, a haptic system 114, and a sound system 116.

The visual displays 112 are arranged to output visual information to the user, e.g. screens for presenting textual and symbolic information, and/or lights which can flash to present visual information to the user.

The haptic system 114 is arranged to output haptic information to the user, e.g. vibrations. For example, the haptic system 114 may be arranged to vibrate different surfaces within the cockpit of the aircraft, such as the pilot's seat, controllers or screens. This may be used to direct the pilot's attention to particular aircraft components (e.g. to direct the pilot's attention to a screen showing visual information), or to deliver information using vibrations, e.g. using a series of vibrations in a recognisable sequence to the pilot.

The sound system 116 is arranged to output audio information to the user, e.g. via speakers and/or headphones. For example, the sound system 116 may be arranged to output spoken instructions, alarms, or buzzers, to communicate information to the pilot. The processor 108 is arranged to output information to be delivered to the user via at least one of the displays 112, haptic system 114, and/or sound system 116. The processor 108 is arranged to determine which of these sensory channels to deliver information through based on the sensory bandwidth of the user, as determined based on the measurements from the user monitoring sensors 106.

For example, if the pilot is determined to have a low visual sensory bandwidth, the processor may be configured to output information relevant to the particular contextual situation via the haptic system 114 and/or sound system 116, as vibrations and/or audio signals.

In addition to selecting the sensory channel through which to deliver information, the processor 108 is also configured to format the information to be delivered to the user, e.g. the representation of the data (using words, or symbols), and the time and spatial separation. For example, the processor 108 may be configured to determine, from the input of the user monitoring sensors 106, that the user may have a sensory bandwidth for all senses, and so only simple information can be processed. In this instance, information could be presented symbolically via the displays 112, with a gap of a few seconds between presentations of new information to allow time for the user to process the information.

The system 100 further includes user action sensors 109, which are arranged to monitor the actions of the user. The sensors may include one or more of: a motion sensor, a camera, or other sensors suitable for monitoring the user actions. The measurements from these sensors are output to the processor 108, where the processor is configured to determine the actions of the user, e.g. whether the user is responding to the information that is being presented via the sensory channel(s).

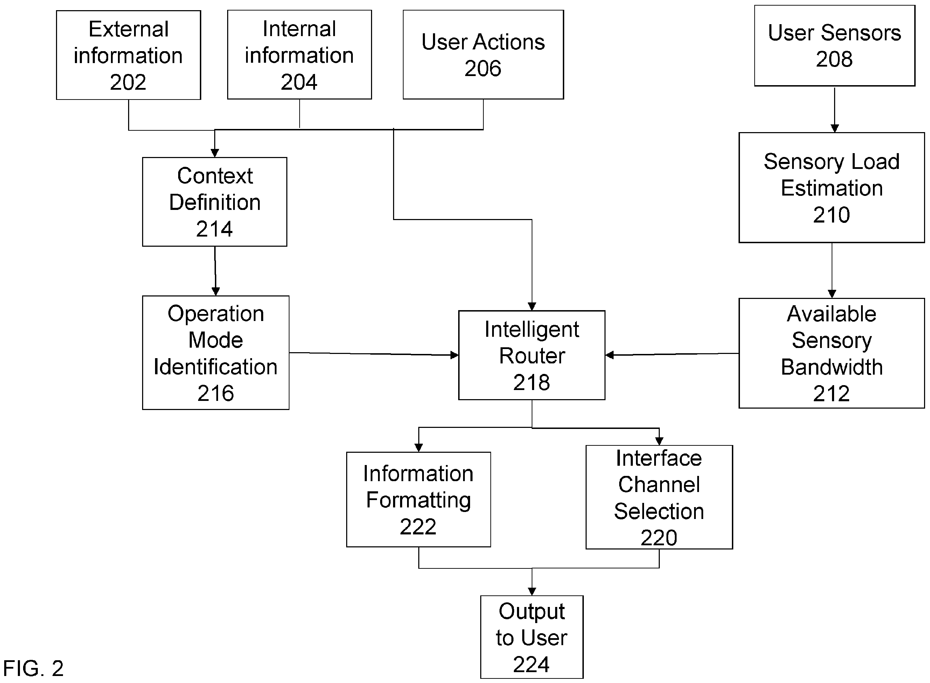

Figure 2 shows schematically a diagram of the flow of information within the system 100 for controlling a human-machine interface shown in Figure 1, e.g. when performing the steps described with reference to Figure 3.

The user sensors 208 are arranged to measure the physiological conditions of the user, and output the information to a sensory load estimation portion 210 of a processor of the system. The sensory load estimation portion 210 of the processor is configured to determine the current sensory load of each sense of the user. The sensory load may be how much information each sense of the user is currently processing. The sensory load estimation portion 210 of the processor is also configured to determine the cognitive load of the user. The cognitive load is how much total information the user is currently processing.

The output from the sensory load estimation portion 210 is arranged to be input to a sensory bandwidth portion 212 of the processor. The sensory bandwidth portion 212 is arranged to determine the available sensory bandwidth of the pilot for each of the senses, using the physiological conditions of the pilot, in addition to the sensory and cognitive load of the pilot. This enables the processor to determine how much information can be presented to each sense of the pilot, for the pilot to still be able to process the information that is presented.

The output from the available sensory bandwidth portion 212 is arranged to be input to an intelligent router 218.

The pilot's actions are monitored at the user action portion 206. For example, one or more sensors (e.g. a camera) within the cockpit may be arranged to monitor with which controllers and/or objects the pilot interacts within the cockpit. For example, when the pilot interacts with a human-machine interface within the aircraft, e.g. by pressing a button, the button performs its specified function, and sends a notification to the processor that the button has been pressed. The user action portion 206 is arranged to output the information regarding the pilot's actions to a context definition portion of the processor 214, and to the intelligent router 218.

The system (e.g. the processor) is arranged to receive external and internal information 202, 204, from sources external and internal to the aircraft as described with reference to Figure 1. The external and internal information 202, 204 may include information to be delivered to the pilot, as well as information relevant to the present situation of the aircraft, e.g. if the aircraft is landing. The external and internal information 202, 204 is arranged to be output to a context definition portion of the processor 214, and to the intelligent router 218.

The context definition portion 214 of the processor is configured to receive the information from the user action portion 206, and the external and internal information 202, 204. The context definition portion 214 is arranged to determine the contextual situation of the aircraft. For example, the context definition portion 214 may determine that the aircraft is landing (e.g. the external information 202 includes the air-traffic control giving clearance for landing, and/or the internal information 204 includes an indication from a sensor monitoring the landing gear that the pilot has deployed the landing gear). The context definition portion 214 is arranged to output the information regarding the contextual situation of the aircraft to the operation mode identification portion 216 of the processor.

The operation mode identification portion 216 of the processor is configured to receive the contextual situation of the aircraft from the context definition portion 216, determines the operational environment of the aircraft, e.g. take-off phase, approach phase, abnormal or emergency flight operation, and generate a set of operational mode conditions that need to be met for that particular operational environment. For example, if the operation mode identification portion 216 determines from the context definition portion 214 that the aircraft is landing, an operational mode condition may be that the landing gear needs to be extended., The operation mode identification portion 216 of the processor is arranged to output the operational mode condition(s) to the intelligent router 218.

The information regarding the sensory bandwidth 212, the user actions 206, the operational mode condition(s) 216 and the external and internal information 202, 204 to be communicated to the user are arranged to be input to the intelligent router 218 portion of the processor. This allows for the intelligent router to receive an input of what is currently happening, and how the pilot is reacting, to determine what needs to be done next and thus what information should be presented next.

The intelligent router 218 is arranged to determine what information from the external and internal information 202, 204 should be presented to the pilot based on the operational mode condition(s) 216. The intelligent router 218 is further arranged to determine which sensory channel of the human-machine interface of the system the information should be presented through, based on the available sensory bandwidth 212 of the pilot. The intelligent router 218 is arranged to output the information to be delivered to the pilot to the information formatting portion 222 and the interface channel section 220 of the processor.

The information formatting portion 222 of the processor is arranged to determine the format of the information that is to be output to the pilot, for example whether the information should be communicated using text or symbols. This is based on the available sensory bandwidth 212 and overall cognitive load of the pilot as determined at the sensory load estimation portion 210 of the processor.

The interface channel selection portion 220 of the processor is arranged to determine which medium of the selected sensory channel the information should be output through. For example, where the intelligent router 218 has selected the visual sensory channel, the interface channel selection portion 220 determines which screen the information should be output through, e.g. based on where the user is currently looking as determined by the user sensors 208.

The selected format of information to be delivered to the user is then arranged to be output to the user via the selected sensory channel and medium at the selected output 224.

The intelligent router 218 is also arranged to receive as an input the user actions 206. This is used by the intelligent router 218 to determine whether the pilot has processed and responded to the information delivered through the selected sensory channel, and whether information should be re-issued to the pilot, e.g. through a different sensory channel.

Figure 3 shows a flow-chart of a method for controlling a human-machine interface. The method involves a sequence of steps which take place within a system of the aircraft. The system for controlling the human-machine interface may include, be part of, or be separate from a flight management system of an aircraft. These steps may occur sequentially. Some steps may occur simultaneously, for example on parallel processors.

At a first step 300, the physiological conditions of the user (e.g. a pilot of an aircraft) are measured.

At a second step 302, the processor uses the physiological conditions of the pilot to determine the sensory bandwidth of the pilot. For example, if the pilot has a high measured heart rate, it is likely that they are stressed, and thus their sensory bandwidth may be reduced across all senses. If the pilot's eye movement is limited, e.g. they are focused on a single screen in the cockpit, they may have an increased visual sensory bandwidth, but a reduced aural sensory bandwidth.

At a third step 304, the processor receives information to be delivered to the pilot. This information may be issued from systems on-board the aircraft, e.g. navigational information from the flight management system and status information from aircraft components such as the operational status of the landing gear upon landing the aircraft. The information may also be issued from systems external to the aircraft, e.g. information from the air traffic controller on the ground and from other aircraft.

At a fourth step 306, the processor selects which sensory channel of the human-machine interface to output the information through, based on the sensory bandwidth of the pilot.

At a fifth step 308, the information is output through the selected sensory channel. For example, the information is communicated via spoken instructions from a speaker in the cockpit.

At a sixth step 310, the pilot's response to the information delivered is monitored. For example, the processor receives the pilot's input to the controls of the aircraft in response to the information, and the status of the aircraft. For example, the speakers may instruct the pilot to descend to a lower altitude. The processor then monitors if the pilot has manoeuvred the aircraft to a lower altitude, or contacted air traffic control to ask to stay at the current altitude.

At seventh step 312, if the pilot has responded to the information, the system repeats the first, second, third, fourth, fifth and sixth steps 300, 302, 304, 306, 308, 310 for additional information. The user actions monitored at the sixth step 310 may be used in addition to the physiological conditions measured at the first step 300 to determine the sensory bandwidth at the second step 302.

At the seventh step 312, if the pilot has not responded to the information, e.g. the pilot has not reacted at all to the information that they should descent to a lower altitude, the information is re-issued to the user at the eight step 314, and the fourth, fifth, sixth, and seventh steps 306, 308, 310, 312 are repeated for the same piece of information. The information may be output through a different or additional sensory channel at the fourth step 306, e.g. a sensory channel with the next highest sensory bandwidth. For example, the information may be output via the visual and aural sensory channels simultaneously (e.g. information delivered via a speaker and shown on a screen. The format of the information may also be changed, e.g. to an alarm that directs the pilot's attention to the altitude reading of the aircraft.

The information is output through the selected sensory channel(s) at the fifth step 308, and the pilot's response is monitored again at the sixth step 310. The fourth, fifth, sixth, seventh and eight steps 306, 308, 310, 312, 314 are then repeated until the information is acknowledged by the pilot.

It will be appreciated by those skilled in the art that the invention has been illustrated by describing one or more specific embodiments thereof, but is not limited to these embodiments; many variations and modifications are possible, within the scope of the accompanying claims.

## Claims

1. A method of controlling a human-machine interface, the method comprising:
measuring one or more physiological conditions of a user interacting with the human-machine interface;
using the one or more physiological conditions to determine the sensory bandwidth of the user;
wherein the sensory bandwidth comprises the user's capacity to respond to visual, aural, and haptic stimulation;
receiving information to be delivered to the user;
selecting at least one sensory channel of the human-machine interface through which to deliver the information, based on the sensory bandwidth of the user;
wherein the sensory channels comprise a visual channel, an aural channel, and a haptic channel;
outputting information through the selected sensory channels of the human-machine interface.

2. The method as claimed in claim 1, wherein the human-machine interface comprises a portion of an aircraft.

3. The method as claimed in claim 2, wherein the information to be delivered to the user comprises information from systems onboard the aircraft.

4. The method as claimed in claim 2 or 3, wherein the information to be delivered to the user comprises information from a source external to the aircraft.

5. The method as claimed in claim 1, wherein the human-machine interface comprises a portion of an air-traffic control system.

6. The method as claimed in any preceding claim, comprising sorting the information to be delivered to the user in order of priority.

7. The method as claimed in any preceding claim, comprising receiving one or more inputs of the user to the human-machine interface and using the one or more user inputs to determine the sensory bandwidth of the user.

8. The method as claimed in any preceding claim, comprising receiving one or more inputs of the user to the human-machine interface and determining whether the user has responded to the information output through the selected sensory channels of the human-machine interface.

9. The method as claimed in claim 8, comprising re-issuing the information when it is determined that the user has not responded to the information.

10. The method as claimed in claim 9, wherein the information is re-issued through a different sensory channel.

11. The method as claimed in claims 9 or 10, wherein the information is re-issued using an adaptive transition.

12. The method as claimed in any preceding claim, comprising adjusting the level of detail of the information output through the human-machine interface based on the sensory bandwidth of the user.

13. The method as claimed in any preceding claim, comprising adjusting the time and/or space distribution of the information output through the human-machine interface based on the sensory bandwidth of the user.

14. The method of any preceding claim, comprising determining the contextual situation of the human-machine interface.

15. A system for controlling a human-machine interface, the system comprising:
a human-machine interface for outputting information to a user;
wherein the human-machine interface comprises one or more sensory channels;
wherein the one or more sensory channels comprise one or more of a visual channel, an aural channel and a haptic channel;
one or more sensors for measuring one or more physiological conditions of the user;
a processor, wherein the processor is arranged to:
receive the one or more physiological conditions from the one or more sensors;
determine the sensory bandwidth of the user based on the one or more physiological conditions;
wherein the sensory bandwidth comprises the user's capacity to respond to visual, aural, and haptic stimulation;
receive information to be delivered to the user;
select one or more sensory channels through which to deliver the information, based on the sensory bandwidth of the user; and
output the information to the user through the selected sensory channels of the human-machine interface.
